# EUROPEAN PATENT SPECIFICATION

(11) **EP 2 682 646 B1**
(45) Date of publication and mention of the grant of the patent: **26.10.2016**
(21) Application number: 12752598.8
(22) Date of filing: 29.02.2012
(51) Int. Cl.: F16H 61/02, B60K 6/547, B60W 10/10, B60W 20/00, F16H 61/04, F16H 63/22, F16H 63/30, F16H 63/20

(54) **MANUAL TRANSMISSION**
HANDSCHALTUNG
TRANSMISSION MANUELLE

(30) Priority: 01.03.2011 JP 2011043803
(43) Date of publication of application: 08.01.2014
(73) Proprietor: Aisin AI Co., Ltd., Nishio-shi, Aichi 445-0006 (JP)
(72) Inventor: OSUKA Shinya, Nishio-shi Aichi 445-0006 (JP); MASUI Yuki, Nishio-shi Aichi 445-0006 (JP)
(74) Representative: Ettmayr, Andreas
(86) International application number: PCT/JP2012/055128
(87) International publication number: WO 2012/118130

(56) References cited:
- EP-A1- 1 232 891
- EP-A1- 2 653 364
- WO-A1-2010/070707
- WO-A1-2011/000345
- JP-A- 2005 028 968
- JP-A- 2009 107 626
- JP-A- 2010 076 680
- JP-A- 2010 269 718
- JP-A- 2010 280 334
- US-A- 4 852 421
- US-A1- 2002 040 818

## Description

### TECHNICAL FIELD

The present invention relates to a manual transmission applied to a vehicle which has an internal combustion engine and an electric motor as power sources, and more particularly to a manual transmission applied to a vehicle which includes a friction clutch disposed between the output shaft of the internal combustion engine and the input shaft of the manual transmission.

### BACKGROUND ART

Conventionally, there has been widely known a so-called hybrid vehicle which includes an engine and an electric motor as power sources (see, for example, Japanese Patent Application Laid-Open (kokai) No. 2000-224710). In such a hybrid vehicle, a structure can be adopted in which the output shaft of the electric motor is connected to one of the output shaft of the internal combustion engine, the input shaft of a transmission, and the output shaft of the transmission. In the following description, drive torque from the output shaft of the internal combustion engine will be referred to as "engine drive torque," and drive torque from the output shaft of the electric motor as "motor drive torque."

In recent years, there has been developed a power transmission control apparatus applied to a hybrid vehicle which includes a manual transmission and a friction clutch (hereinafter referred to as an "HV-MT vehicle"). A term "manual transmission" used herein refers to a transmission which does not include a torque converter and whose gear stage is selected in accordance with the shift position of a shift lever operated by a vehicle driver (the manual transmission may be abbreviated as MT). Also, a term "friction clutch" used herein refers to a clutch which is interposed between the output shaft of the internal combustion engine and the input shaft of the manual transmission and which is configured such that the engagement state of a friction plate changes in accordance with the operation quantity of a clutch pedal operated by the driver.

EP 2 653 364 A1 and WO 2011/000345 disclose manual transmissions according to the preamble part of claim 1. US 2002/040818 A1 describes similar features in an automated manual transmission.

### SUMMARY OF THE INVENTION

In the following description, a configuration is assumed in which the output shaft of the electric motor is connected to the input shaft of the transmission or the output shaft of the transmission in a power transmissible manner. The "ratio of the rotational speed of the input shaft of the transmission to the rotational speed of the output shaft of the transmission" will be referred to as "transmission speed reduction ratio" and the "ratio of the rotational speed of the electric motor to the rotational speed of the output shaft of the transmission" will be referred to as "motor speed reduction ratio".

In the manual transmission applied to HV-MT vehicle, it is preferable to decrease or increase the rotational speed of the electric motor in relation to the rotational speed of the drive wheels as necessary in order to enable the drive wheels to stably produce satisfactory drive torque on the basis of the motor drive torque. A conceivable method of realizing this is providing a motor speed change mechanism which changes the motor speed reduction ratio without changing the gear stage of the manual transmission (i.e., without changing the transmission speed reduction ratio).

In the case where such a motor speed change mechanism is provided, the transmission of torque from the output shaft of the electric motor to the output shaft of the transmission (i.e., the drive wheels) must be interrupted temporarily when the motor speed reduction ratio is changed. Accordingly, a shock (a change in acceleration in the front-rear direction of the vehicle) is unavoidably generated as a result of the change in the motor speed reduction ratio. Generation of such a shock provides unpleasant feel to the vehicle driver.

An object of the present invention is to provide a manual transmission for an HV-MT vehicle which includes a motor speed change mechanism capable of changing the motor speed reduction ratio and which makes a driver less likely to perceive a shock produced as a result of changing of the motor speed reduction ratio.

The present invention provides a manual transmission according to claim 1. A manual transmission according to the present invention thus includes an input shaft (Ai) for receiving power from internal combustion engine and an output shaft (Ao) for outputting power to drive wheels of the vehicle. This manual transmission includes a transmission speed change mechanism (M1) and a motor speed change mechanism (M2).

The transmission speed change mechanism (M1) operates, when a driver moves a shift operation member (SL) on a shift pattern to each of shift completion positions corresponding to a plurality of gear stages (1-st to 6-th), so as to establish a "power transmission system (line) between the input shaft and the output shaft such that the transmission speed reduction ratio is set to a value corresponding to a corresponding gear stage." The motor speed change mechanism (M2) establishes a power transmission system (line) between the input or output shaft and the electric motor and changes the "motor speed reduction ratio" without changing the "transmission speed reduction ratio." The "motor speed reduction ratio" may be changed between two values, or may be changed among three or more values.

The motor speed change mechanism (M2) is configured to change the "motor speed reduction ratio" when the position of the shift operation member passes through a predetermined position on the shift pattern other than the shift completion positions.

In the manual transmission of the present invention, when the driver changes or sets the gear stage, the driver must operate the shift operation member on the shift pattern. In general, a human being becomes less likely to perceive a shock or the like from the outside, when he or she performs some operation. The above-mentioned configuration is adopted in view of this fact.

According to the above-described configuration, the "motor speed reduction ratio" is changed while the driver is operating the shift operation member. In other words, the driver receives a shock generated as a result of changing of the "motor speed reduction ratio," while the driver is operating the shift operation member. Accordingly, the driver becomes less likely to perceive the shock.

In the manual transmission, movement of the shift operation member to each of the shift completion positions corresponding to the plurality of gear stages is achieved by movement of the shift operation member to a corresponding selection position achieved by a selection operation which is an operation of the shift operation member in the left-right direction of the vehicle in a state in which no power transmission system (line) is established between the input and output shafts, and subsequent movement of the shift operation member from the corresponding selection position to the corresponding shift completion position achieved by a shift operation which is an operation of the shift operation member in the front-rear direction of the vehicle.

The "motor speed reduction ratio" may be changed when the shift operation member which moves in the front-rear direction of the vehicle during the shift operation passes through a predetermined position (other than shift completion positions) in the front-rear direction of the vehicle. More preferable, the "motor speed reduction ratio" is changed when the shift operation member which moves in the left-right direction of the vehicle during the selection operation passes through a predetermined position in the left-right direction of the vehicle.

Now, a case is assumed in which the "motor speed reduction ratio" is changed during the selection operation of the shift operation member. In this case, preferably, the motor speed reduction ratio is set to a first speed reduction ratio when the position of the shift operation member in the left-right direction of the vehicle moves from a first region (Hi region) on one side of the predetermined position located toward to the shift completion positions of gear stages for high speed travel to a second region (Lo region) on the other side of the predetermined position located toward to the shift completion positions of gear stages for low speed travel, and the motor speed reduction ratio is set to a second speed reduction ratio which is smaller than the first speed reduction ratio when the position of the shift operation member in the left-right direction of the vehicle moves from the second region to the first region.

By virtue of this configuration, when a gear stage for low speed travel is selected, the "motor speed reduction ratio" is set to a larger value, whereby the amplification factor of the motor drive torque is increased. Therefore, a large drive torque based on the motor drive torque can be obtained when the vehicle travels at a relatively low speed. As a result, the electric motor can be made smaller in size. On the other hand, when a gear stage for high speed travel is selected, the "motor speed reduction ratio" is set to a smaller value, whereby the rotational speed of the electric motor relative to the vehicle speed can be decreased. Accordingly, the rotational speed of the motor can be restricted to a range in which the energy efficiency is high when the vehicle travels at a relatively higher speed. As a result, a high energy efficiency can be maintained when the vehicle travels at a relatively higher speed.

### BRIEF DESCRIPTION OF THE DRAWINGS

FIG. 1 is a schematic diagram of a power transmission control apparatus which includes a manual transmission for an HV-MT vehicle according to an embodiment of the present invention in a state in which an N position is selected.
FIG. 2 is a schematic diagram showing the positional relation between an S&S shaft and a plurality of fork shafts in a state in which the N position is selected.
FIG. 3 is a diagram used for explaining a "Hi region" and "Lo region" of MG speed reduction ratio on a shift pattern.
FIG. 4 is a diagram used for explaining an operation of changing the MG speed reduction ratio from "Hi" to "Lo" upon movement of the shift lever position from the "Hi region" to the "Lo region" by the selection operation.
FIG. 5 is a diagram used for explaining an operation of changing the MG speed reduction ratio from "Lo" to "Hi" upon movement of the shift lever position from the "Lo region" to the "Hi region" by the selection operation.
FIG. 6 is a diagram corresponding to FIG. 1 in a state in which a 1-st gear position is selected.
FIG. 7 is a diagram corresponding to FIG. 2 in a state in which the 1-st gear position is selected.
FIG. 8 is a diagram corresponding to FIG. 1 in a state in which a 2-nd gear position is selected.
FIG. 9 is a diagram corresponding to FIG. 2 in a state in which the 2-nd gear position is selected.
FIG. 10 is a diagram corresponding to FIG. 1 in a state in which a 3-rd gear position is selected.
FIG. 11 is a diagram corresponding to FIG. 2 in a state in which the 3-rd gear position is selected.
FIG. 12 is a diagram corresponding to FIG. 1 in a state in which a 4-th gear position is selected.
FIG. 13 is a diagram corresponding to FIG. 2 in a state in which the 4-th gear position is selected.
FIG. 14 is a diagram corresponding to FIG. 1 in a state in which a 5-th gear position is selected.
FIG. 15 is a diagram corresponding to FIG. 2 in a state in which the 5-th gear position is selected.
FIG. 16 is a diagram corresponding to FIG. 1 in a state in which a 6-th gear position is selected.
FIG. 17 is a diagram corresponding to FIG. 2 in a state in which the 6-th gear position is selected.
FIG. 18 is a diagram corresponding to FIG. 4 and relating to a manual transmission for an HV-MT vehicle according to a modified embodiment of the present invention.
FIG. 19 is a diagram corresponding to FIG. 5 and relating to the manual transmission for an HV-MT vehicle according to the modified embodiment of the present invention.

### MODE FOR CARRYING OUT THE INVENTION

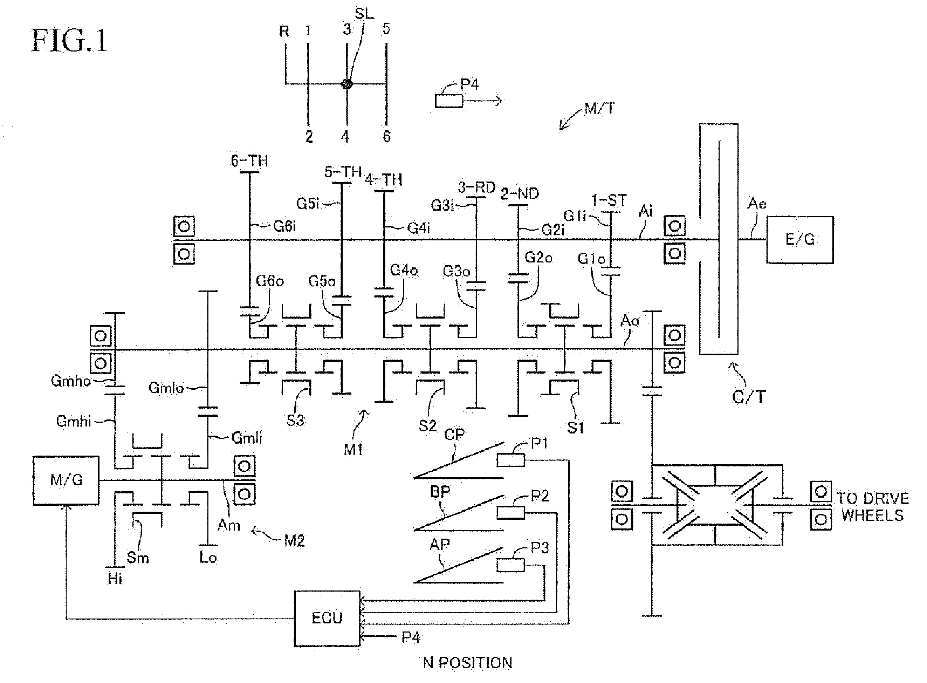

An example of a power transmission control apparatus (hereinafter referred to as "present apparatus") of a vehicle which includes a manual transmission M/T according to an embodiment of the present invention will now be described with reference to the drawings. As shown in FIG. 1, the present apparatus is applied to "a vehicle which includes an engine E/G and a motor generator M/G as power sources, and also includes a manual transmission M/T having no torque converter, and a friction clutch C/T"; i.e., the above-described "HV-MT vehicle." This "HV-MT vehicle" may be a front-wheel-drive vehicle, a rear-wheel-drive vehicle, or a four-wheel-drive vehicle.

### (Overall Structure)

First, the overall structure of the present apparatus will be described. The engine E/G is a well known internal combustion engine, such as a gasoline engine which uses gasoline as fuel, or a diesel engine which uses light oil as fuel.

The manual transmission M/T is a transmission which does not include a torque converter and whose gear stage is selected in accordance with the shift position of a shift lever SL operated by a driver. The manual transmission M/T has an input shaft Ai for receiving power from an output shaft Ae of the engine E/G, an output shaft Ao for outputting power to drive wheels of the vehicle, and an MG shaft Am for receiving power from the motor generator M/G. The input shaft Ai, the output shaft Ao, and the MG shaft Am are disposed in parallel with one another. The MG shaft Am may be the output shaft of the motor generator M/G itself or may be a shaft which is parallel to the output shaft of the motor generator M/G and is connected with the output shaft of the motor generator M/G via a gear train in a power transmissible manner. The structure of the manual transmission M/T will be described in detail later.

The friction clutch C/T is disposed between the output shaft Ae of the engine E/G and the input shaft Ai of the manual transmission M/T. The friction clutch C/T is a well known clutch configured such that the engagement state of a friction plate (more specifically, the axial position of the friction plate, which rotates together with the input shaft Ai, in relation to a flywheel, which rotates together with the output shaft Ae) changes in accordance with an operation quantity (depression amount) of a clutch pedal CP operated by the driver.

The engagement state of the friction clutch C/T (the axial position of the friction plate) may be mechanically adjusted in accordance with the operation quantity of the clutch pedal CP, by making use of a link mechanism or the like which mechanically connects the clutch pedal CP to the friction clutch C/T (the friction plate). Alternatively, the engagement state of the friction clutch C/T may be electrically adjusted by making use of drive force of an actuator which operates in accordance with the operation quantity of the clutch pedal CP detected by a sensor (a sensor P1 to be described later) (by a so-called by-wire scheme).

The motor generator M/G has one of well known structures (e.g., an AC synchronous motor), and its rotor (not illustrated) rotates together with the MG shaft Am. In the following description, drive torque from the output shaft Ae of the engine E/G will be referred to as "EG torque," and drive torque from the MG shaft Am (torque from the output shaft of the motor generator M/G) will be referred to as "MG torque."

The present apparatus includes a clutch operation quantity sensor P1 which detects the operation quantity (depression amount, clutch stroke, etc.) of the clutch pedal CP, a brake operation quantity sensor P2 which detects the operation quantity (depression force, presence/absence of operation, etc.) of a brake pedal BP, an accelerator operation quantity sensor P3 which detects the operation quantity (accelerator opening) of an accelerator pedal AP, and a shift position sensor P4 which detects the position of the shift lever SL.

Moreover, the present apparatus includes an electronic control unit (hereinafter simply referred to as the "ECU"). On the basis of information, among others, from the above-mentioned sensors P1 to P4 and other sensors, etc., the ECU controls the EG torque by controlling the amount of fuel injected into the engine E/G (opening of its throttle valve) and controls the MG torque by controlling an inverter (not shown).

### (Structure of M/T)

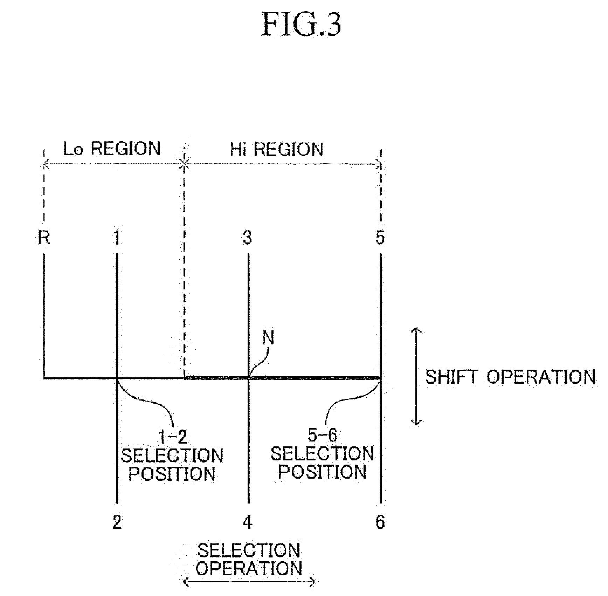

The structure of the manual transmission M/T will be described specifically with reference to FIGS. 1 to 3. As can be understood from FIG. 1 and the shift pattern of the shift lever SL shown in FIG. 3, in the present example, six forward gear stages (1-st through 6-th) and a single reverse gear stage (R) are provided as selectable gear stages (shift completion positions). In the following description, description regarding the reverse gear stage (R) will be omitted.

As shown in the shift pattern of FIG. 3, an operation of the shift lever SL in the left-right direction of the vehicle will be referred to as a "selection operation," and an operation of the shift lever SL in the front-rear direction of the vehicle will be referred to as a "shift operation." As shown in FIG. 3, on the shift pattern, the intersection between the locus of the selection operation and the locus of the shift operation between the "shift completion position for 1-st" and the "shift completion position for 2-nd" will be referred to as a "1-2 selection position"; the intersection between the locus of the selection operation and the locus of the shift operation between the "shift completion position for 3-rd" and the "shift completion position for 4-th" will be referred to as an "N position" (or a "3-4 selection position"); and the intersection between the locus of the selection operation and the locus of the shift operation between the "shift completion position for 5-th" and the "shift completion position for 6-th" will be referred to as a "5-6 selection position." For convenience of explanation, the "ratio of the rotational speed of the input shaft Ai to that of the output shaft Ao" will be referred to as "MT speed reduction ratio," and the "ratio of the rotational speed of the MG shaft Am to that of the output shaft Ao" will be referred to as "MG speed reduction ratio."

The manual transmission M/T includes sleeves S1, S2, S3, and Sm. The sleeves S1, S2, and S3 are fitted onto corresponding hubs which rotate together with the output shaft Ao such that the sleeves cannot rotate relative to the corresponding hubs but can move axially relative to the corresponding hubs. The sleeve S1 is used to switch the MT speed reduction ratio between values corresponding to "1-st" and "2-nd." The sleeve S2 is used to switch the MT speed reduction ratio between values corresponding to "3-rd" and "4-th." The sleeve S3 is used to switch the MT speed reduction ratio between values corresponding to "5-th" and "6-th." The sleeve Sm is fitted onto a hub which rotates together with the MG shaft Am such that the sleeve Sm cannot rotate relative to the hub but can move axially relative to the hub. The sleeve Sm is used to switch the MG speed reduction ratio between values corresponding to "Hi" and ""Lo."

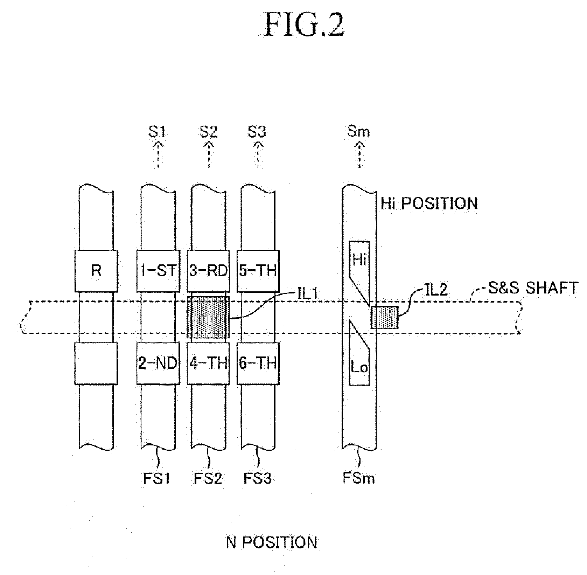

As shown in FIG. 2, the sleeves S1, S2, S3, and Sm are integrally coupled with fork shafts FS1, FS2, FS3, and FSm, respectively. During a shift operation, the fork shaft FS1, FS2, or FS3 (i.e., the sleeve S1, S2, or S3) is driven in its axial direction (in the vertical direction in FIG. 2, or in the left-right direction in FIG. 1) by a first inner lever IL1 (shown by hatching in FIG. 2) provided on an S&S shaft interlocked with the operation of the shift lever SL. During a section operation, the fork shaft FSm (i.e., the sleeve Sm) is driven in its axial direction (in the vertical direction in FIG. 2, or in the left-right direction in FIG. 1) by a second inner lever IL2 (shown by hatching in FIG. 2) provided on the S&S shaft (the details of which will be described later).

The S&S shaft shown in FIG. 2 is a "shift-rotation type" S&S shaft which translates in its axial direction as a result of the selection operation (in FIG. 1, operation in the left-right direction), and rotates about the axis as a result of the shift operation (in FIG. 1, operation in the vertical direction). However, the S&S shaft may be a "selection-rotation type" S&S shaft which rotates about the axis as a result of the selection operation, and translates in its axial direction as a result of the shift operation.

### <Changeover of the MG speed reduction ratio>

First, the changeover of the MG speed reduction ratio will be described with reference to FIGS. 3 to 5. As shown in FIG. 3, two regions are defined for the position (in the left-right direction of the vehicle) of the shift lever SL which moves as a result of the selection operation. Specifically, a region on the left side of "a predetermined position" between the 1-2 selection position and the N position in FIG. 3 will be referred to as "Lo region" and a region on the right side of the "predetermined position" in FIG. 3 will be referred to as "Hi region" (refer to a region indicated by a thick solid line in FIG. 3).

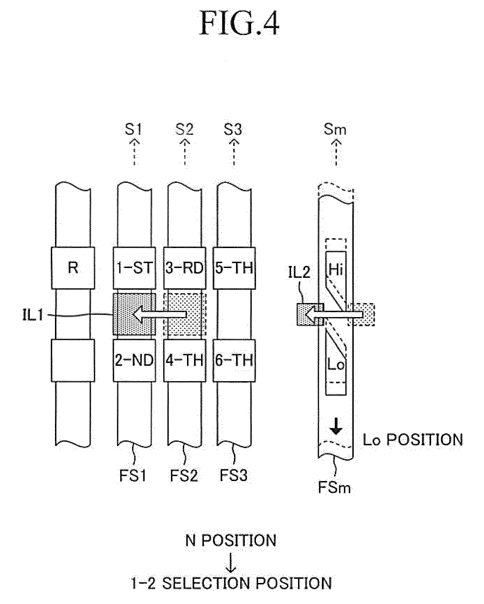

The changeover of the MG speed reduction ratio is performed when the position of the shift lever SL moves from the "Hi region" to the "Lo region" (or vice versa) during the selection operation (i.e., when the position of the shift lever SL passes through the "predetermined position"). Specifically, as shown in FIG. 4, when the position of the shift lever SL moves from the "Hi region" to the "Lo region" during the selection operation, the second inner lever IL2 of the S&S shaft drives a tapered surface of a head for "Lo" fixed to the fork shaft FSm in a "Lo" direction (downward in FIG. 4). Thus, the fork shaft FSm (i.e., the sleeve Sm) is driven (in downward in FIG. 4, or rightward in FIG. 1). As a result, the sleeve Sm moves from a "Hi position" (the above-mentioned "second position") to a "Lo position" (the above-mentioned "first position") so that the sleeve Sm engages with an idle gear Gmli provided on the MG shaft Am. The idle gear Gmli always meshes with a stationary gear Gmlo provided on the output shaft Ao. As a result, a power transmission system (line) for MG torque is established between the MG shaft Am and the output shaft Ao through the idle gear Gmli and the stationary gear Gmlo. At this time, the MG speed reduction ratio is equal to the value of (the number of the gear teeth of the stationary gear Gmlo/that of the idle gear Gmli) (= "Lo").

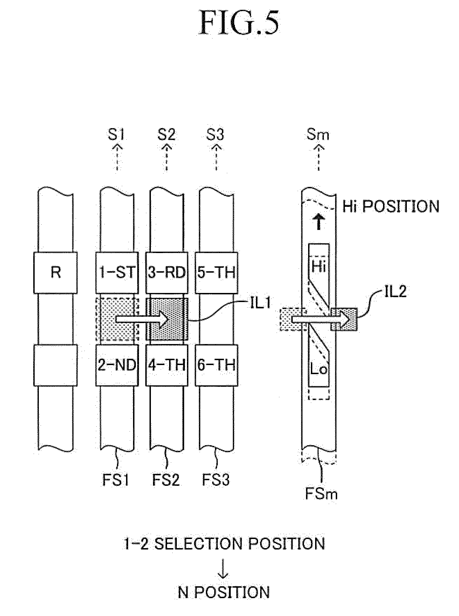

On the other hand, as shown in FIG. 5, when the position of the shift lever SL moves from the "Lo region" to the "Hi region" during the selection operation, the second inner lever IL2 of the S&S shaft drives a tapered surface of a head for "Hi" fixed to the fork shaft FSm in a "Hi" direction (upward in FIG. 5). Thus, the fork shaft FSm (i.e., the sleeve Sm) is driven (upward in FIG. 5, or leftward in FIG. 1). As a result, the sleeve Sm moves from the "Lo position" to the "Hi position" and engages with an idle gear Gmhi provided on the MG shaft Am. The idle gear Gmhi always meshes with a stationary gear Gmho provided on the output shaft Ao. As a result, a power transmission system for MG torque is established between the MG shaft Am and the output shaft Ao through the idle gear Gmhi and the stationary gear Gmho. At this time, the MG speed reduction ratio is equal to the value of (the number of the gear teeth of the stationary gear Gmho/that of the idle gear Gmhi) (= "Hi"). In the present embodiment, the value of (the number of the gear teeth of the stationary gear Gmlo/that of the idle gear Gmli) is greater than the value of (the number of the gear teeth of the stationary gear Gmho/that of the idle gear Gmhi).

As is understood from the foregoing, the MG speed reduction ratio is changed from "Hi" (a smaller value) to "Lo" (a larger value) when the position of the shift lever SL moves from the "Hi region" to the "Lo region" during a selection operation. Accordingly, for example, when a shift operation is performed such that the position of the shift lever SL moves from the "N position" to the "shift completion position for 1-st (or 2-nd)," the MG speed reduction ratio is switched from "Hi" to "Lo" in the course of movement of the shift lever SL from the "N position" to the "1-2 selection position." After that point in time, the MG speed reduction ratio is maintained at "Lo" so long as the position of the shift lever SL is maintained in the "Lo region" (i.e., 1-st or 2-nd is selected).

Since the MG speed reduction ratio is set to "Lo" (a larger value) when a gear stage for low speed travel (1-st or 2-nd) is selected, the amplification factor of the MG torque increases. Therefore, a large drive torque can be obtained on the basis of the MG torque when the vehicle travels at a relatively lower speed. As a result, the motor generator M/G can be made smaller in size.

Meanwhile, when the position of the shift lever SL moves from the "Lo region" to the "Hi region" during a selection operation, the MG speed reduction ratio is changed from "Lo" to "Hi." Accordingly, for example, when a shift operation is performed such that the position of the shift lever SL moves from the "shift completion position for 2-nd (or 1-st) to the "shift completion position for 3-rd (or 4-th)," the MG speed reduction ratio is switched from "Lo" to "Hi" in the course of movement of the shift lever SL from the "1-2 selection position" to the "N position." Whereafter, the MG speed reduction is maintained at "Hi" so long as the position of the shift lever SL is maintained in the "Hi region" (i.e., one of N and 3-rd through 6-th is selected).

Since the MG speed reduction ratio is set to "Hi" (a smaller value) when a gear stage for high speed travel (3-rd through 6-th) is selected, the rotational speed of the motor generator M/G relative to the vehicle speed can be decreased. Accordingly, the rotational speed of the motor generator M/G can be restricted to a range in which the energy efficiency is high when the vehicle travels at a relatively higher speed. As a result, a high energy efficiency can be maintained when the vehicle travels at a relatively higher speed.

As described above, the manual transmission M/T includes an MG speed change mechanism M2 which can selectively set the MG speed reduction ratio to one of two values; i.e., "Hi" and "Lo." The MG speed change mechanism M2 is composed of the stationary gears Gmlo and Gmho, the idle gears Gmli and Gmhi, the sleeve Sm, the fork shaft FSm, etc.

### <Changeover of MT speed reduction ratio>

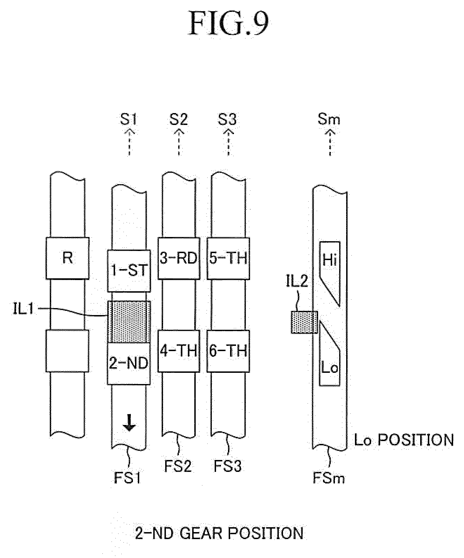

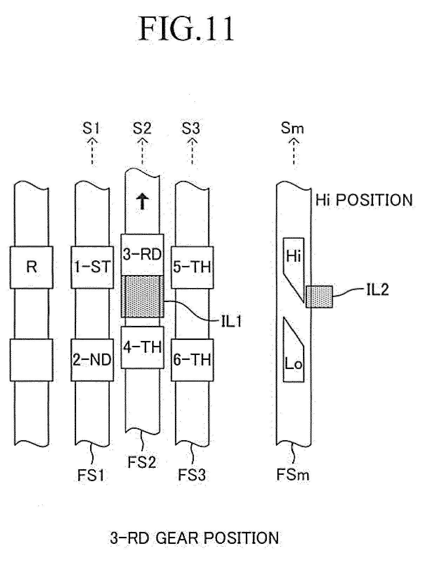

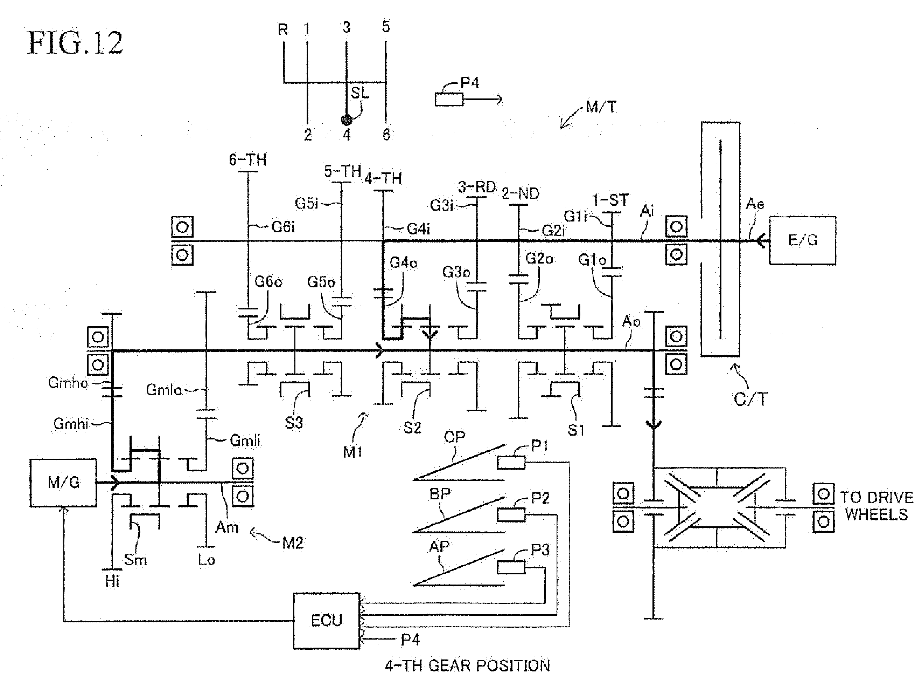

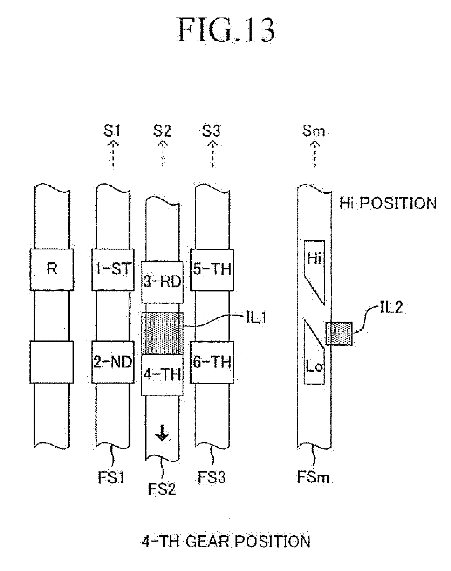

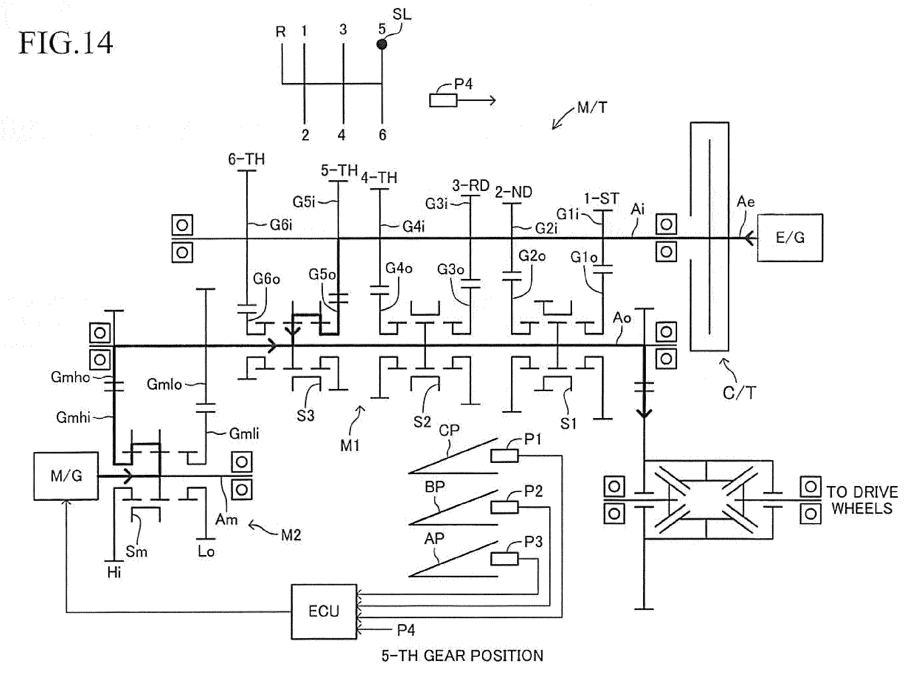

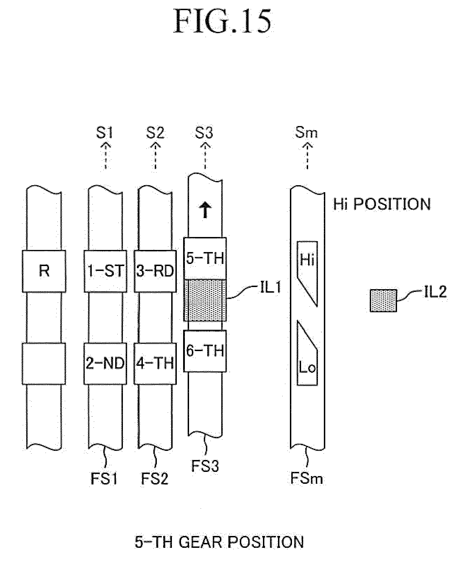

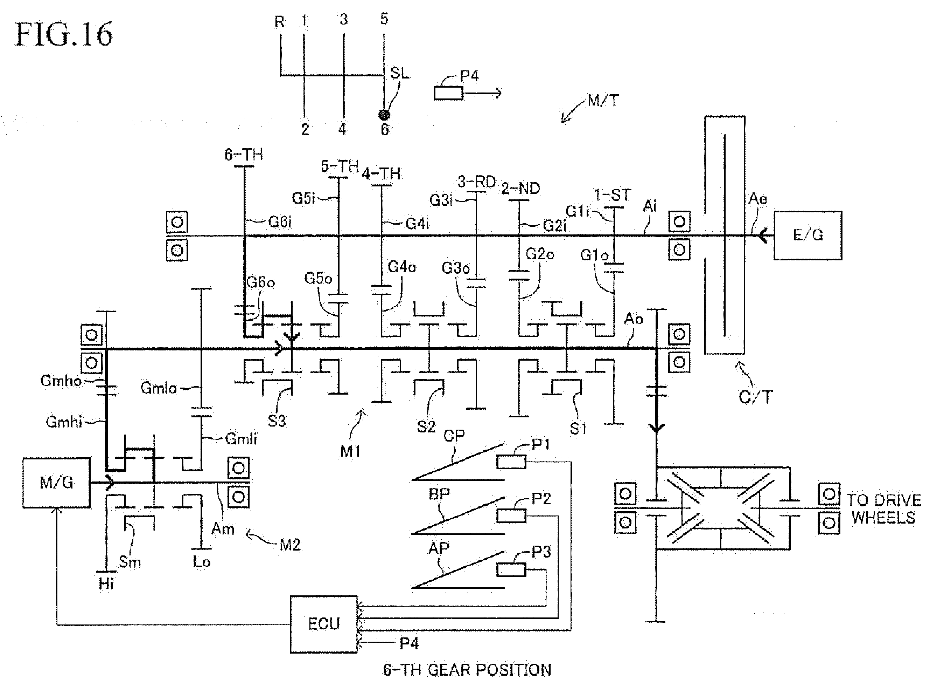

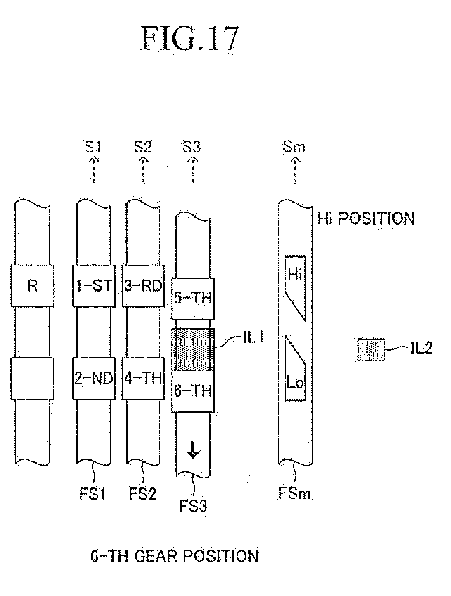

Now, the changeover of the MT speed reduction ratio will be briefly described with reference to FIGS. 1, 2, and 6 through 17. When the shift lever SL is in the "N position as shown in FIGS. 1 and 2, all the sleeves S1, S2 and S3 are in their "neutral positions". In this state, the sleeves S1, S2 and S3 are not engaged with the corresponding idle gears. As described above, in this state, the sleeve Sm is engaged with the idle gear Gmhi (the MG speed reduction ratio is set to "Hi").

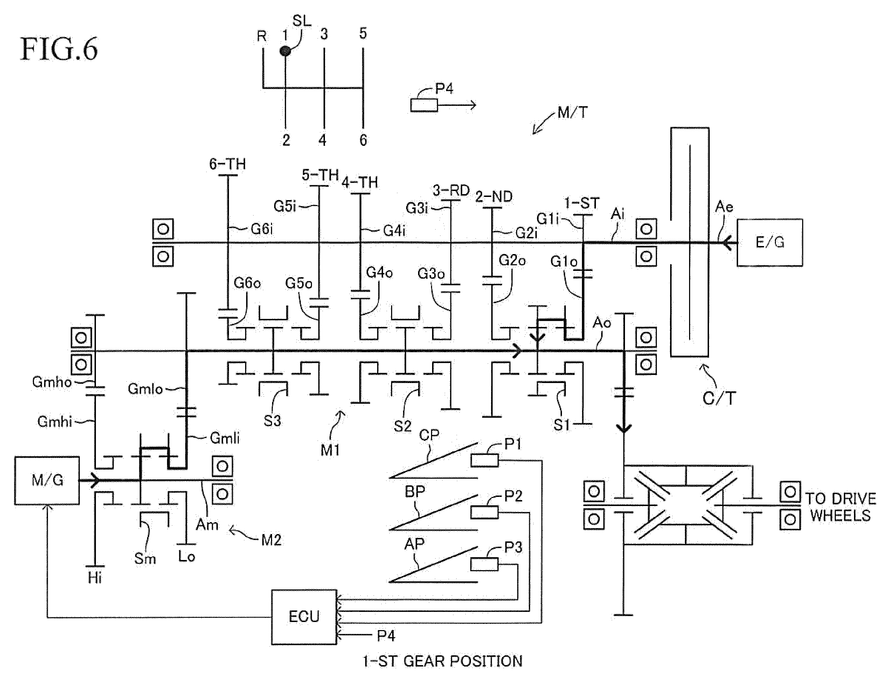

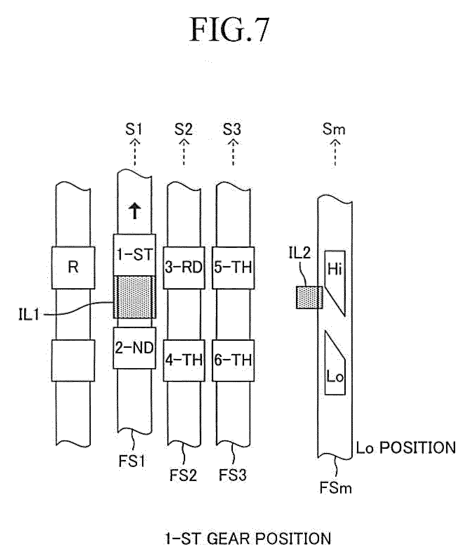

When the shift lever SL moves to the "shift completion position for 1-st" as shown in FIGS. 6 and 7, the first inner lever IL1 of the S&S shaft drives a head for "1-st" fixed to the fork shaft FS1 in a "1-st" direction (upward in FIG. 7), so that only the fork shaft FS1 (thus, the sleeve S1) is driven (upward in FIG. 7, or rightward in Fig. 6). As a result, the sleeve S1 moves from the "neutral position" to the "portion for 1-st." The sleeves S2 and S3 are in their "neutral positions." As described above, in this state, the sleeve Sm is engaged with the idle gear Gmli (the MG speed reduction ratio is set to "Lo").

In this state, the sleeve S1 is engaged with an idle gear G1o provided on the output shaft Ao. The idle gear G1o is always meshed with a stationary gear G1 provided on the input shaft Ai. As a result, a power transmission system corresponding to "1-st" for the EG torque is established between the input shaft Ai and the output shaft Ao through the gears G1 i and G1o. Namely, the MT speed reduction ratio is equal to the value of (the number of gear teeth of the idle gear G1o/that of the stationary gear G1 i) (= "1-st").

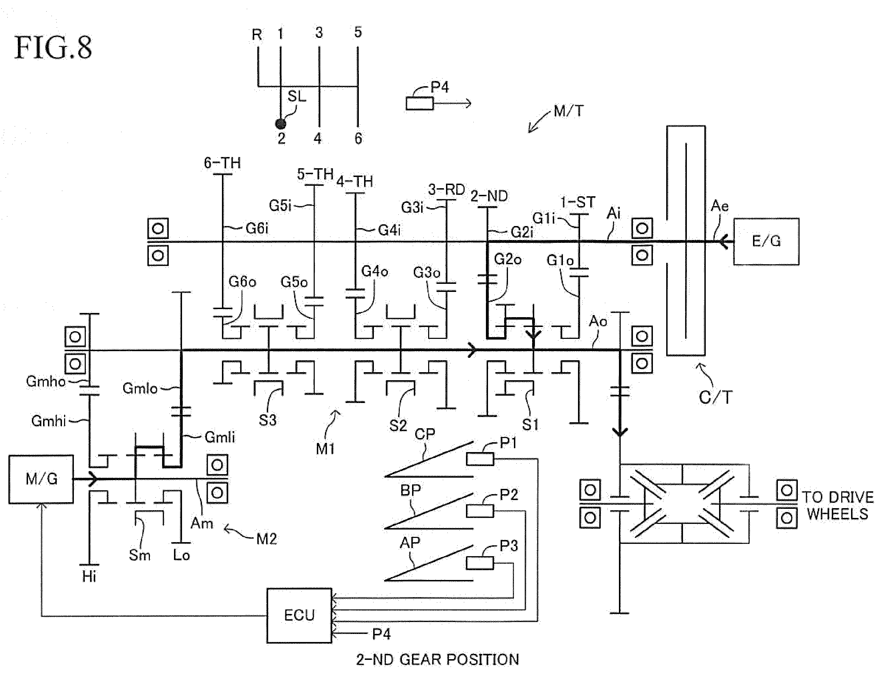

When the shift lever SL is in any of the "shift completion positions for "2-nd" through "6-th" as shown in FIGS. 8 through 17, similarly to the case of the "shift completion position for 1-st", a power transmission system corresponding to "N-th" (N: 2 through 6) is established between the input shaft Ai and the output shaft Ao through the gears GNi and GNo. At this time, the MT speed reduction ratio becomes equal to the value of (the number of the gear teeth of the idle gear GNo/that of the stationary gear GNi) (= "N-th") (N: 2 through 6). The MT speed reduction ratio gradually decreases as the gear stage changes from "1-st toward "6-th."

As described above, the manual transmission M/T includes an MT speed change mechanism M1 which can selectively set the MT speed reduction ratio to one of six values corresponding to "1-st" through "6-th." The MT speed change mechanism M1 is composed of the stationary gears GNi, the idle gears GNo, the sleeves S1 through S3, the fork shafts FS1 through FS3, etc. (N: 1 through 6).

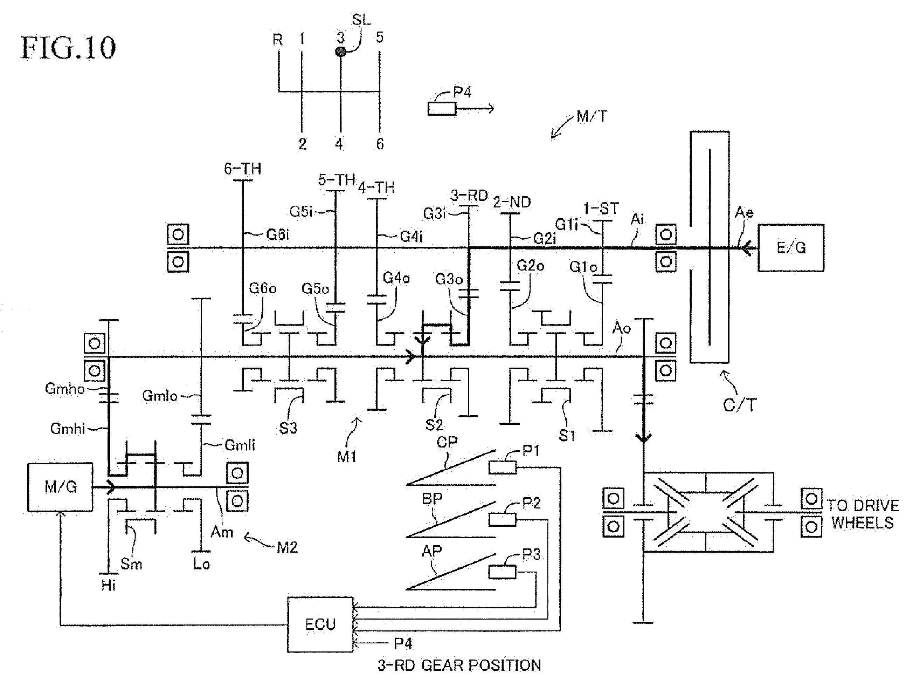

As mentioned above, as indicated by thick solid lines in FIGS. 6 and 8, when an "N-th" gear position (N: 1 through 2) is selected, a power transmission system is established for transmitting the EG torque transmitted through the clutch C/T (the MT speed reduction ratio = "N-th"), and a power transmission system is established for transmitting the MG torque (the MG speed reduction ratio = "Lo"), whereby so-called "hybrid travel" can be realized. Also, as indicated by thick solid lines in FIGS. 10, 12, 14 and 16, when a "N-th" gear position (N: 3 through 6) is selected, a power transmission system is established for transmitting the EG torque transmitted through the clutch C/T (the MT speed reduction ratio = "N-th"), and a power transmission system is established for transmitting the MG torque (the MG speed reduction ratio = "Hi"), whereby so-called "hybrid travel" can be realized.

### (Control of E/G)

Control of the engine E/G by the present apparatus is generally conducted as follows. When the vehicle is stopped or "N" is selected, the engine E/G is maintained in a stop state in which fuel injection is not conducted. The engine E/G is started (fuel injection is started), for example, when any one of "1-st" through "6-th" is selected in the state in which the engine E/G is stopped. During a period during which the engine E/G is operated (fuel injection is conducted), the EG torque is controlled in accordance with the accelerator opening, etc. The engine E/G is stopped again when "N" is selected or the vehicle is stopped during the period during which the engine E/G is operated.

### (Control of M/G)

Control of the motor generator M/G by the present apparatus is generally conducted as follows. When the vehicle is stopped or "N" is selected, the motor generator M/G is maintained in a stop state (MG torque = 0). For example, when any one of "1-st" through "6-th" is selected in the state in which the motor generator M/G is stopped, the MG torque is controlled in accordance with the accelerator opening, the clutch stroke, etc. When "N" is selected or the vehicle stopped, the motor generator M/G is stopped again.

### (Action and effects)

As described above, in the manual transmission M/T according to the embodiment of the present invention, while a driver is performing the selection operation of the shift lever SL (operation in the left-right direction of the vehicle), the MG speed reduction ratio is changed. In other words, while performing the selection operation of the shift lever SL, the driver receives a shock generated as a result of changing of the MG speed reduction ratio. In general, a human being becomes less likely to perceive a shock or the like from the outside, when he or she performs some operation. For the above-described reason, the present manual transmission M/T makes the driver less likely to perceive the shock generated as a result of changing of the MG speed reduction ratio.

The present invention is not limited to the above-described embodiment, and various modifications may be adopted without departing from the scope of the present invention. For example, although the sleeves S1, S2 and S3 (and the corresponding idle gears) are all provided on the output shaft Ao in the above-mentioned embodiment, they may be provided on the input shaft Ai. Alternatively, some of the sleeves S1, S2, S3 (and the corresponding idle gears) may be provided on the output shaft Ao, and the remaining sleeve(s) (and the corresponding idle gear(s)) may be provided on the input shaft Ai.

Although the MG shaft Am is connected to the output shaft Ao in a power transmissive manner in the above-mentioned embodiment, the MG shaft Am may be connected to the input shaft Ai in a power transmissive manner. In the above-mentioned embodiment, the MG speed change mechanism M2 is configured to change the MG speed reduction ratio between two values (i.e., "Hi" and "Lo"). However, the MG speed change mechanism M2 may be configured to change the MG speed reduction ratio among three or more values. In the above-mentioned embodiment, the MG speed reduction ratio is changed during the selection operation. However, the embodiment may be modified such that the MG speed reduction ratio is changed during the shift operation.

In the above-mentioned embodiment, the boundary between the "Hi region" and the "Lo region" is located between the "1-2 selection position" and the "N position." However, the boundary between the "(Hi region" and the "Lo region" may be located between the "5-6 selection position" and the "N" position. In this case, the MG speed reduction ratio is set to "Lo" when any one of "1-st" through "4-th" is selected, and is set to "Hi" when "5-th" or "6-th" is selected.

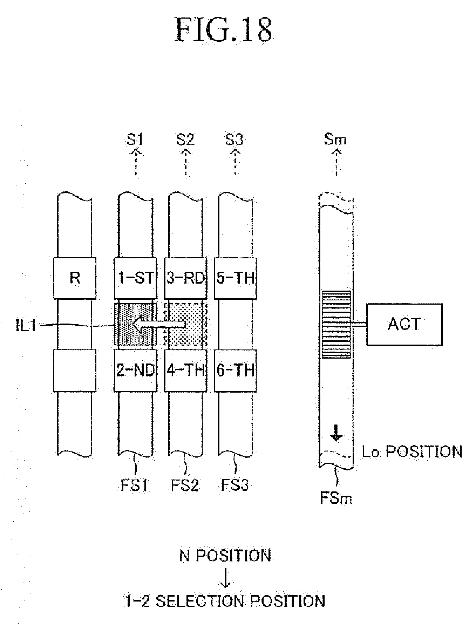

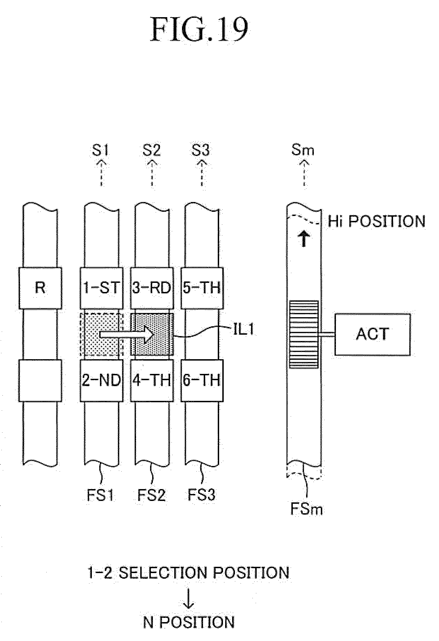

In the above-mentioned embodiment, the fork shaft FSm (i.e., the sleeve Sm) is driven by using the movement of the second inner lever IL2 of the S&S shaft. However, as shown in FIGS. 18 and 19, the fork shaft FSm (i.e., the sleeve Sm) may be driven by using the drive force of an actuator ACT.

In this case, as shown in FIG 18, when the position of the shift lever SL moves from the "Hi region" to the "Lo region" during the selection operation, the fork shaft FSm (i.e., the sleeve Sm) is moved from the "Hi position" to "Lo position" by the drive force of the actuator ACT. On the other hand, as shown in FIG. 19, when the position of the shift lever SL moves from the "Lo region" to "Hi region" during the selection operation, the fork shaft FSm (i.e., the sleeve Sm) is moved from the "Lo position" to the "Hi position" by the drive force of the actuator ACT. The judgment as to whether the position of the shift lever SL has moved from the "Hi region" to the "Lo region" (or vice versa) can be made on the basis of, for example, the detection output from a shift position sensor P4 and the detection output from a sensor which is turned on and off in response to the movement of the position of the shift lever SL from the "Hi region" to the "Lo region" (or vice versa).

## Claims

1. A manual transmission (M/T) having no torque converter, which is configured to be applied to a vehicle including an internal combustion engine (E/G) and an electric motor (M/G) as power sources, comprising:
an input shaft (Ai) for receiving power from the internal combustion engine;
an output shaft (Ao) for outputting power to a drive wheel of the vehicle;
a transmission speed change mechanism (M1) which operates, when a driver moves a shift operation member (SL) on a shift pattern to each of shift completion positions corresponding to a plurality of gear stages (1-st to 6-th), so as to establish a power transmission system between the input shaft and the output shaft such that a transmission speed reduction ratio, which is the ratio of rotational speed of the input shaft to that of the output shaft, is set to a value corresponding to a corresponding gear stage;
a motor speed change mechanism (M2) which establishes a power transmission system between the input or output shaft and the electric motor and changes, without changing the transmission speed reduction ratio, a motor speed reduction ratio which is the ratio of rotational speed of the electric motor to that of the output shaft,
wherein the transmission speed change mechanism is configured such that movement of the shift operation member to each of the shift completion positions corresponding to the plurality of gear stages is achieved by movement of the shift operation member to a corresponding selection position achieved by a selection operation which is an operation of the shift operation member in a left-right direction of the vehicle in a state in which no power transmission system is established between the input and output shafts, and subsequent movement of the shift operation member from the corresponding selection position to the corresponding shift completion position achieved by a shift operation which is an operation of the shift operation member in a front-rear direction of the vehicle;
**characterized in that**
the motor speed change mechanism is configured to change the motor speed reduction ratio when the position of the shift operation member which moves in the left-right direction of the vehicle during the selection operation passes through a predetermined position on the shift pattern in the left-right direction of the vehicle.

2. A manual transmission according to claim 1, wherein the motor speed change mechanism is configured to set the motor speed reduction ratio to a first speed reduction ratio when the position of the shift operation member in the left-right direction of the vehicle moves from a first region (Hi region) on one side of the predetermined position located toward to the shift completion positions of gear stages for high speed travel to a second region (Lo region) on the other side of the predetermined position located toward to the shift completion positions of gear stages for low speed travel during the selection operation of the shift operation member, and to set the motor speed reduction ratio to a second speed reduction ratio which is smaller than the first speed reduction ratio when the position of the shift operation member in the left-right direction of the vehicle moves from the second region to the first region during the selection operation of the shift operation member.

3. A manual transmission according to Claim 2, wherein
the transmission speed change mechanism comprises:
a plurality of stationary gears (G1i, G2i, G3i, G4i, G5i, G6i) which are non-rotatably provided on the input shaft or the output shaft and which correspond to the plurality of gear stages,
a plurality of idle gears (G1o, G2o, G3o, G4o, G5o, G6o) which are rotatably provided on the input shaft or the output shaft, which correspond to the plurality of gear stages, and which always mesh with the corresponding stationary gears,
a plurality of sleeves (S1, S2, S3) each of which is provided on corresponding one of the input and output shafts to be non-rotatable and axially movable in relation thereto, each sleeve being engageable with a corresponding one of the plurality of idle gears so as to fix the corresponding idle gear to the corresponding shaft such that the corresponding idle gear does not rotate in relation to the corresponding shaft,
a plurality of fork shafts (FS1, FS2, FS3) each of which is coupled to corresponding one of the plurality of sleeves and is axially movable, and
a shift and selection shaft which moves axially or rotates about its axis as a result of the selection operation of the shift operation member and rotates about its axis or moves axially as a result of the shift operation of the shift operation member, wherein as a result of the selection operation of the shift operation member, one of the plurality of fork shafts is selected, and as a result of the shift operation of the shift operation member a first inner lever (IL1) projecting from a side surface of the shift and selection shaft presses and moves the selected fork shaft in its axial direction, to thereby establish the corresponding gear stage; and
the motor speed change mechanism comprises an axially movable changeover shaft (FSm) which is moved to a first position in the axial direction so as to set the motor speed reduction ratio to the first speed reduction ratio and is moved to a second position different from the first position so as to set the motor speed reduction ratio to the second speed reduction ratio,
wherein upon movement of the position of the shift operation member from the first region to the second region during the selection operation of the shift operation member, a second inner lever (IL2) which projects from the side surface of the shift and selection shaft and is different from the first inner lever presses the changeover shaft in its axial direction so as to change the axial position of the changeover shaft from the second position to the first position, and
upon movement of the position of the shift operation member from the second region to the first region during the selection operation of the shift operation member, the second inner lever presses the changeover shaft in its axial direction so as to change the axial position of the changeover shaft from the first position to the second position.

4. A manual transmission according to Claim 2, wherein the motor speed change mechanism comprises:
an axially movable changeover shaft (FSm) which is moved to a first position in the axial direction so as to set the motor speed reduction ratio to the first speed reduction ratio and is moved to a second position different from the first position so as to set the motor speed reduction ratio to the second speed reduction ratio, and
an actuator (ACT) which drives the changeover shaft in its axial direction so as to adjust the axial position of the changeover shaft,
wherein upon movement of the position of the shift operation member from the first region to the second region during the selection operation of the shift operation member, the actuator is controlled so as to change the axial position of the changeover shaft from the second position to the first position, and
upon movement of the position of the shift operation member from the second region to the first region during the selection operation of the shift operation member, the actuator is controlled so as to change the axial position of the changeover shaft from the first position to the second position.

## Patentansprüche

1. Handschaltung (M/T) ohne Drehmomentwandler, welche dafür konfiguriert ist, in einem Fahrzeug angewendet zu werden, welches einen Verbrennungsmotor (E/G) und einen Elektromotor (M/G) als Leistungsquellen umfasst, aufweisend:
eine Antriebswelle (Ai) zum Aufnehmen von Leistung aus dem Verbrennungsmotor;
eine Abtriebswelle (Ao) zum Ausgeben von Energie an ein Antriebsrad des Fahrzeugs;
einen Übertragungsgeschwindigkeits-Wechselmechanismus (M1), welcher operiert, wenn ein Fahrer ein Schalt-Bedienelement (SL) auf einem Schalt-Schema zu einer jeweiligen von Schaltendpositionen bewegt, welche mehreren Gängen (erster bis sechster) entsprechen, um ein Leistungsübertragungssystem zwischen der Antriebswelle und der Abtriebswelle einzurichten, so dass ein Übertragungsgeschwindigkeits-Reduktionsverhältnis, welches das Verhältnis der Drehgeschwindigkeit der Antriebswelle zu der der Abtriebswelle ist, auf einen Wert eingestellt wird, der einem entsprechenden Gang entspricht;
einen Motordrehzahl-Wechselmechanismus (M2), welcher ein Leistungsübertragungssystem zwischen der Eingangs-oder Abtriebswelle und dem Elektromotor einrichtet und ein Motordrehzahl-Reduktionsverhältnis, welches das Verhältnis der Drehgeschwindigkeit des Elektromotors zu der der Abtriebswelle ist, wechselt, ohne das Übertragungsgeschwindigkeits-Reduktionsverhältnis zu wechseln,
wobei der Übertragungsgeschwindigkeits-Wechselmechanismus so konfiguriert ist, dass eine Bewegung des Schalt-Bedienelements zu einer jeweiligen der Schaltendpositionen, die den mehreren Gängen entsprechen, durch eine Bewegung des Schalt-Bedienelements zu einer entsprechenden Auswahlposition erreicht wird, welche durch eine Auswahloperation, welche eine Operation des Schalt-Bedienelements in eine Links-Rechts-Richtung des Fahrzeugs in einem Zustand ist, in welchem kein Leistungsübertragungssystem zwischen der Antriebswelle und der Abtriebswelle eingerichtet ist, und eine anschließende Bewegung des Verstellungs-Bedienelements aus der entsprechenden Auswahlposition in die entsprechende Schaltendposition erreicht wird, die durch eine Schaltoperation erreicht wird, welche eine Operation des Schalt-Bedienelements in einer Vorwärts-Rückwärts-Richtung des Fahrzeugs ist;
**dadurch gekennzeichnet, dass**
der Motordrehzahl-Wechselmechanismus dafür konfiguriert ist, das Motordrehzahl-Reduktionsverhältnis zu wechseln, wenn die Position des Schalt-Bedienelements, welches sich während der Auswahloperation in Links-Rechts-Richtung des Fahrzeugs bewegt, in der Links-Rechts-Richtung des Fahrzeugs eine vorgegebene Position auf dem Schaltschema passiert.

2. Handschaltung nach Anspruch 1, wobei der Motordrehzahl-Wechselmechanismus dafür konfiguriert ist, das Motordrehzahl-Reduktionsverhältnis auf ein erstes Drehzahl-Reduktionsverhältnis einzustellen, wenn sich die Position des Schalt-Bedienelements in der Links-Rechts-Richtung des Fahrzeugs während der Auswahloperation des Schalt-Bedienelements aus einer ersten Zone (Hi-Zone) auf einer Seite der vorgegebenen Position, die in Richtung der Schaltendpositionen von Gängen für Fahren mit hoher Geschwindigkeit angeordnet ist, in eine zweite Zone (Lo-Zone) auf der anderen Seite der vorgegebenen Position bewegt, die in Richtung der Schaltendpositionen von Gängen für Fahren mit niedriger Geschwindigkeit angeordnet ist, und das Motordrehzahl-Reduktionsverhältnis auf ein zweites Drehzahl-Reduktionsverhältnis einzustellen, welches niedriger als das erste Drehzahl-Reduktionsverhältnis ist, wenn sich die Position des Schalt-Bedienelements in der Links-Rechts-Richtung des Fahrzeugs während der Auswahloperation des Schalt-Bedienelements aus der zweiten Zone in die erste Zone bewegt.

3. Handschaltung nach Anspruch 2, wobei
der Übertragungsgeschwindigkeits-Wechselmechanismus umfasst:
mehrere stationäre Zahnräder (G1i, G2i, G3i, G4i, G5i, G6i), welche nicht drehbar auf der Antriebswelle oder der Abtriebswelle bereitgestellt sind und welche den mehreren Gängen entsprechen;
mehrere Freilauf-Zahnräder (G1o, G2o, G3o, G4o, G5o, G6o), welche drehbar auf der Antriebswelle oder der Abtriebswelle bereitgestellt sind, welche den mehreren Gängen entsprechen und welche immer in die entsprechenden stationären Zahnräder greifen,
mehrere Buchsen (S1, S2, S3), welche jeweils an einer entsprechenden der Antriebs- und Abtriebswelle so bereitgestellt sind, dass sie in Beziehung dazu nicht drehbar und axial bewegbar sind, wobei jede Buchse mit einem entsprechenden der mehreren Freilauf-Zahnräder in Eingriff zu bringen ist, um das entsprechende Freilauf-Zahnrad an der entsprechenden Welle zu befestigen, so sich dass das entsprechende Freilauf-Zahnrad in Beziehung zu der entsprechenden Welle nicht dreht,
mehrere Gabelwellen (FS1, FS2, FS3), welche jeweils mit einer entsprechenden der mehreren Hüllen verbunden und axial bewegbar sind, und
eine Schalt- und Auswahlwelle, welche sich als ein Ergebnis der Auswahloperation des Schalt-Bedienelements axial bewegt oder um ihre Achse dreht und sich als ein Ergebnis der Schaltoperation des Schalt-Bedienelements um ihre Achse dreht oder axial bewegt, wobei als ein Ergebnis der Auswahloperation des Schalt-Bedienelements eine der mehreren Gabelwellen ausgewählt wird und als ein Ergebnis der Schaltoperation des Schalt-Bedienelements ein erster innerer Hebel (IL1), der aus einer Seitenfläche der Verstellungs- und Auswahlwelle hervorragt, die ausgewählte Gabelwelle in ihrer axialen Richtung drückt und bewegt, um dadurch den entsprechenden Gang einzurichten; und
der Motordrehzahl-Wechselmechanismus eine axial bewegbare Umschaltwelle (FSm) umfasst, welche in eine erste Position in der axialen Richtung bewegt wird, um das Motordrehzahl-Reduktionsverhältnis auf das erste Drehzahl-Reduktionsverhältnis einzustellen, und in eine zweite Position bewegt wird, die sich von der ersten Position unterscheidet, um das Motordrehzahl-Reduktionsverhältnis auf das zweite Drehzahl-Reduktionsverhältnis einzustellen,
wobei auf die Bewegung der Position des Schalt-Bedienelements aus der ersten Zone in die zweite Zone während der Auswahloperation des Schalt-Bedienelements hin ein zweiter innerer Hebel (IL2), welcher aus der Seitenfläche der Schalt- und Auswahlwelle hervorragt und sich von dem ersten inneren Hebel unterscheidet, die Umschaltwelle in ihrer axialen Richtung drückt, um die axiale Position der Umschaltwelle aus der zweiten Position in die erste Position zu wechseln, und
auf die Bewegung der Position des Schalt-Bedienelements aus der zweiten Zone in die erste Zone während der Auswahloperation des Schalt-Bedienelements hin der zweite innere Hebel die Umschaltwelle in ihrer axialen Richtung drückt, um die axiale Position der Umschaltwelle aus der ersten Position in die zweite Position zu wechseln.

4. Handschaltung nach Anspruch 2, wobei der Motordrehzahl-Wechselmechanismus umfasst:
eine axial bewegbare Umschaltwelle (FSm), welche in eine erste Position in der axialen Richtung bewegt wird, um das Motordrehzahl-Reduktionsverhältnis auf das erste Drehzahl-Reduktionsverhältnis einzustellen, und in eine zweite Position bewegt wird, die sich von der ersten Position unterscheidet, um das Motordrehzahl-Reduktionsverhältnis auf das zweite Drehzahl-Reduktionsverhältnis einzustellen, und
ein Stellelement (ACT), welches die Umschaltwelle in ihrer axialen Richtung treibt, um die axiale Position der Umschaltwelle einzustellen,
wobei auf die Bewegung der Position des Schalt-Bedienelements aus der ersten Zone in die zweite Zone während der Auswahloperation des Schalt-Bedienelements hin das Stellelement so gesteuert wird, dass es die axiale Position der Umschaltwelle aus der zweiten Position in die erste Position wechselt, und
auf die Bewegung der Position des Schalt-Bedienelements aus der zweiten Zone in die erste Zone während der Auswahloperation des Schalt-Bedienelements hin das Stellelement so gesteuert wird, dass es die axiale Position der Umschaltwelle aus der ersten Position in die zweite Position wechselt.

## Revendications

1. Transmission manuelle (M/T) n'ayant pas de convertisseur de couple, qui est configurée pour être appliquée à un véhicule comprenant un moteur à combustion interne (E/G) et un moteur électrique (M/G) comme sources de puissance, comprenant :
un arbre d'entrée (Ai) pour la réception de puissance du moteur à combustion interne ;
un arbre de sortie (Ao) pour l'émission de puissance à une roue d'entraînement du véhicule ;
un mécanisme de changement de vitesse de transmission (M1) qui fonctionne, lorsqu'un conducteur déplace un élément de commande de changement de vitesse (SL) sur une grille de changement de vitesse vers chacune des positions de réalisation de changement de vitesse correspondant à la pluralité d'étages d'engrenage (1^{ère} à 6^{ème}), de sorte à établir un système de transmission de puissance entre l'arbre d'entrée et l'arbre de sortie de sorte qu'un rapport de réduction de vitesse de transmission, qui est le rapport entre la vitesse de rotation de l'arbre d'entrée et celle de l'arbre de sortie, est réglé à une valeur correspondant à un étage d'engrenage correspondant ;
un mécanisme de changement de vitesse de moteur (M2) qui établit un système de transmission de puissance entre l'arbre d'entrée ou de sortie et le moteur électrique et change, sans changer le rapport de réduction de vitesse de transmission, un rapport de réduction de vitesse de moteur qui est le rapport entre la vitesse de rotation du moteur électrique et celle de l'arbre de sortie.
dans laquelle
le mécanisme de changement de vitesse de transmission est configuré de sorte que le déplacement de l'élément de commande de changement de vitesse vers chacune des positions de réalisation de changement de vitesse correspondant à la pluralité d'étages d'engrenage est obtenu par le déplacement de l'élément de commande de changement de vitesse vers une position de sélection correspondante obtenue par une opération de sélection qui est une opération de l'élément de commande de changement de vitesse dans une direction gauche-droite du véhicule dans un état dans lequel aucun système de transmission de puissance n'est établi entre les arbres d'entrée et de sortie, et le déplacement subséquent de l'élément de commande de changement de vitesse de la position de sélection correspondante à la position de réalisation de changement de vitesse correspondante obtenue par une opération de changement de vitesse qui est une opération de l'élément de commande de changement de vitesse dans une direction avant-arrière du véhicule ;
caractérisée en que
le mécanisme de changement de vitesse de moteur est configuré pour changer le rapport de réduction de vitesse de moteur lorsque la position de l'élément de commande de changement de vitesse qui se déplace dans la direction gauche-droite du véhicule pendant l'opération de sélection passe par une position prédéterminée sur la grille de changement de vitesse dans la direction gauche-droite du véhicule.

2. Transmission manuelle selon la revendication 1, dans laquelle le mécanisme de changement de vitesse de moteur est configuré pour régler le rapport de réduction de vitesse de moteur à un premier rapport de réduction de vitesse lorsque la position de l'élément de commande de changement de vitesse dans la direction gauche-droite du véhicule se déplace d'une première région (région Hi) d'un côté de la position prédéterminée située vers les positions de réalisation de changement de vitesse d'étage d'engrenage pour une course à vitesse élevée à une deuxième région (région Lo) de l'autre côté de la position prédéterminée située vers les positions de réalisation de changement de vitesse d'étage d'engrenage pour une course à faible vitesse pendant l'opération de sélection de l'élément de commande de changement de vitesse, et pour régler le rapport de réduction de vitesse de moteur à un deuxième rapport de réduction de vitesse qui est inférieur au premier rapport de réduction de vitesse lorsque la position de l'élément de commande de changement de vitesse dans la direction gauche-droite du véhicule se déplace de la deuxième région à la première région pendant l'opération de sélection de l'élément de commande de changement de vitesse.

3. Transmission manuelle selon la revendication 2, dans laquelle
le mécanisme de changement de vitesse de transmission comprend :
une pluralité de pignons stationnaires (G1i, G2i, G3i, G4i, G5i, G6i) qui sont fournis de manière non rotative sur l'arbre d'entrée ou l'arbre de sortie et qui correspondent à la pluralité d'étages d'engrenage,
une pluralité de pignons inactifs (G1o, G2o, G3o, G4o, G5o, G6o) qui sont fournis de manière rotative sur l'arbre d'entrée ou l'arbre de sortie qui correspondent à la pluralité d'étages d'engrenage, et qui s'engrènent toujours avec les engrenages stationnaires correspondants,
une pluralité de manchons (S1, S2, S3) dont chacun est fourni sur un correspondant des arbres d'entrée et de sortie pour être non rotatif et axialement mobile par rapport à ceux-ci, chaque manchon pouvant être mis en prise avec un correspondant de la pluralité de pignons inactifs de sorte à fixer le pignon inactif correspondant à l'arbre correspondant de sorte que le pignon inactif correspondant ne tourne pas par rapport à l'arbre correspondant,
une pluralité d'arbres de fourche (FS1, FS2, FS3) donc chacun est couplé à un correspondant de la pluralité de manchons et est axialement mobile ; et
un arbre de sélection et de changement de vitesse qui se déplace axialement ou tourne autour de son axe suite à l'opération de sélection de l'élément de commande de changement de vitesse, dans laquelle suite à l'opération de sélection de l'élément de commande de changement de vitesse, un de la pluralité d'arbres de fourche est sélectionné, et suite à l'opération de changement de vitesse de l'élément de commande de changement de vitesse un premier levier interne (IL1) faisant saillie d'une surface latérale de l'arbre de sélection et de changement de vitesse pousse et déplace l'arbre de fourche sélectionnée dans sa direction axiale, pour établir ce faisant l'étage d'engrenage correspondant ; et
le mécanisme de changement de vitesse de moteur comprend un arbre de changement/inversion axialement mobile (FSm) qui est déplacé vers une première position dans la direction axiale de sorte à régler le rapport de réduction de vitesse de moteur au premier rapport de réduction de vitesse et est déplacé vers une deuxième position différente de la première position de sorte à régler le rapport de réduction de vitesse de moteur au deuxième rapport de réduction de vitesse.
dans laquelle lors du déplacement de la position de l'élément de commande de changement de vitesse de la première région à la deuxième région pendant l'opération de sélection de l'élément de commande de changement de vitesse, un deuxième levier interne (IL2) qui fait saillie de la surface latérale de l'arbre de sélection et de changement de vitesse et est différent du premier levier interne pousse l'arbre de commutation dans sa direction axiale de sorte à changer la position axiale de l'arbre de commutation de la deuxième position à la première position, et
lors du déplacement de la position de l'élément de commande de changement de vitesse de la deuxième région à la première région pendant l'opération de sélection de l'élément de commande de changement de vitesse, le deuxième levier interne pousse l'arbre de commutation dans sa direction axiale de sorte à changer la position axiale de l'arbre de commutation de la première position à la deuxième position.

4. Transmission manuelle selon la revendication 2, dans laquelle le mécanisme de changement de vitesse de moteur comprend :
un arbre de commutation axialement mobile (FSm) qui est déplacé vers une première position dans la direction axiale de sorte à régler le rapport de réduction de vitesse de moteur au premier rapport de réduction de vitesse et est déplacé vers une deuxième position différente de la première position de sorte à régler le rapport de réduction de vitesse de moteur au deuxième rapport de réduction de vitesse, et
un actionneur (ACT) qui entraîne l'arbre de commutation dans sa direction axiale de sorte à régler la position axiale de l'arbre de commutation,
dans laquelle lors du déplacement de la position de l'élément de commande de changement de vitesse de la première région à la deuxième région pendant l'opération de sélection de l'élément de commande de changement de vitesse, l'actionneur est commandé de sorte à changer la position axiale de l'arbre de commutation de la deuxième position à la première position, et
lors du déplacement de la position de l'élément de commande de changement de vitesse de la deuxième région à la première région pendant l'opération de sélection de l'élément de commande de changement de direction, l'actionneur est commandé de sorte à changer la position axiale de l'arbre de commutation de la première à la deuxième position.
